# EUROPEAN PATENT SPECIFICATION

(11) **EP 1 956 107 B1**
(45) Date of publication and mention of the grant of the patent: **26.06.2019**
(21) Application number: 07250417.8
(22) Date of filing: 31.01.2007
(51) Int. Cl.: C22C 32/00, G21C 19/07, G21C 19/40, G21F 5/012, C22C 21/00, B22F 3/20

(54) **Aluminum powder alloy composite material for absorbing neutrons, process of production thereof and basket made thereof**
Aluminumpulverlegierungsverbundmaterial für die Absorption von Neutronen , sein Herstellungsverfahren und Korb aus diesem Material
Matériau composite d'alliage de poudre d'aluminum pour absorber le neutrons, processus de production correspondant et panier réalisé correspondant

(43) Date of publication of application: 13.08.2008
(73) Proprietor: Nippon Light Metal Company, Ltd., Tokyo 140-8628 (JP); Nikkeikin Aluminium Core Technology Company, Ltd., Tokyo 140-8628 (JP)
(72) Inventor: OKANIWA, Shigeru, Kambara-cho, Ihara-gun, Shizuoka 421-3291 (JP); ISHII, Hideki, Kambara-cho, Ihara-gun, Shizuoka 421-3291 (JP); IWASE, Masakazu, Niigata-shi, Niigata 9503101 (JP)
(74) Representative: Potter Clarkson

(56) References cited:
- EP-A- 1 632 955
- EP-A1- 1 083 240
- EP-B1- 0 119 006
- EP-B1- 1 172 449
- WO-A-2006/076260
- US-A1- 2006 137 783
- HATCH J E: "Aluminium, Properties and Physical Metallurgy, passage" 1987, ALUMINUM. PROPERTIES AND PHYSICAL METALLURGY, OHIO, AMERICAN SOCIETY FOR METALS, US, PAGE(S) 225-241 , XP002441131 * page 236, line 3 - line 23 *
- SPIEKERMANN P: "LEGIERUNGEN - EIN BESONDERES PATENTRECHTLICHES PROBLEM? - LEGIERUNGSPRUEFUNG IM EUROPAEISCHEN PATENTAMT -" MITTEILUNGEN DER DEUTSCHEN PATENTANWAELTE, HEYMANN, KOLN,, DE, 1993, pages 178-190, XP000961882 ISSN: 0026-6884

## Description

### TECHNICAL FIELD

The present invention relates to an aluminum powder alloy composite material with excellent neutron-absorbing ability and a process of production thereof. Additionally, the present invention also relates to a basket for a cask used for transportation and storage of spent nuclear fuel.

### BACKGROUND ART

Even when spent, nuclear fuel can continue to emit hot, fast neutrons. Since these neutrons can feed nuclear reactions, when nuclear fuel is stored in bulk, the neutrons can cause nuclear reactions to occur. For this reason, nuclear fuel is usually transported or stored after dividing it up into small portions that are then placed in assemblies, known as "baskets", of stainless steel square pipes with neutron-absorbing materials welded to their periphery or to stainless steel square pipes containing neutron-absorbing materials such as boron. The baskets are housed in containers known as "casks", and transported or stored in that state (see, e.g., Japanese Patent Application, Publication No. H8-136695 A)

While Gd, Sm and others may be counted among general examples of substances with the ability to absorb neutrons, boron is the most commonly used neutron-absorbing material. An example of a neutron-absorbing material using B is "Boral", consisting of molded plates formed by sandwiching a mixed powder of B₄C and aluminum between two plates of aluminum, then rolling. Such neutron-absorbing materials are welded to square pipes of stainless steel or the like to form baskets.

However, recent years have seen an increased demand for lighter materials, and a basket material for containers to store spent nuclear fuel assemblies, formed by pressure sintering a mixture of an aluminum powder (Japanese Industrial Standards series) and a boron or boron compound powder has been proposed (see, e.g., Japanese Patent Application, Publication No. 2001-42090 A and Japanese Patent No. 3122436).

Additionally, a neutron-absorbing material produced by dissolving boron into an aluminum alloy has also been proposed (Japanese Patent Application, Publication No. 2003-268471 A).

Since the basket material of casks is continually exposed to high temperatures of about 200 °C during storage of spent fuel rods, it must remain strong at high temperatures, and resist softening even after being repeatedly cooled from high temperatures. In other words, the material must be both heat resistant and corrosion resistant. However, aluminum alloys according to the conventional standards (e.g. Japanese Industrial Standards = "JIS") often do not have sufficient strength and corrosion resistance to be used as a base metal.

Additionally, as for neutron-absorbing materials obtained by dissolving boron into an aluminum alloy, boron is not easily dissolved, making it difficult to raise the boron concentration. Furthermore, the aluminum alloy must be heated to at least 800 °C in order to melt boron, thus reducing productivity and making the melting furnace susceptible to damage. Additionally, it is difficult to disperse the boron evenly, thus causing disparities in the quality.

EP 1 632 955 A1 discloses an aluminium-based extruded neutron absorber comprising a body portion consisting of an aluminium alloy containing boron or a boron compound; and a surface layer portion consisting of an aluminium alloy whose boron content is 1% by mass or less.

### SUMMARY OF THE INVENTION

The present invention was made in view of the above situation, and has the purpose of offering an aluminum alloy composite material for absorbing neutrons, excelling in high-temperature strength and corrosion resistance.

Additionally, the present invention has the purpose of offering an aluminum alloy composite material for absorbing neutrons, excelling not only in high-temperature strength and corrosion resistance, but also having good thermal conductivity.

Furthermore, the present invention has the purpose of offering a process of producing the above-described aluminum alloy composite material for absorbing neutrons, capable of being produced at low cost and excelling in productivity.

Additionally, the present invention has the purpose of offering a basket for a cask produced using the above-described aluminum alloy composite material for absorbing neutrons.

The aluminum powder alloy composite material for absorbing neutrons of the present invention has a boron-based compound having the capability of absorbing neutrons dispersed in a base metal comprising an aluminum alloy, and is characterized in that the base metal is an aluminum alloy consisting of 0.8-3.0 mass% of Mn, 0.15-1.5 mass% of Mg, 0.1-0.6 mass% of Cu and 0.1-1.0 mass% of Fe with respect to the total mass of the base metal, balanced by aluminum and unavoidable impurities, and that the proportional content of the boron-based compound is 0.4 mass% or more by boron content with respect to the total mass of the composite material.

In the above, the aluminum alloy of the base metal may further contain 0.8-2.0 mass% of Si with respect to the total mass of the base metal and together with the Si or without the Si, 0.03-1 mass% of Cr with respect to the total mass of the base metal.

The boron-based compound used in the present invention should preferably be in the amount of 0.4-24 mass% with respect to the total mass of the composite material. Additionally, while the boron-based compound may be of any type that excels in neutron absorbing ability, B₄C is particularly preferred, and when using B₄C, it should be in an amount of 0.5-10 mass% with respect to the total mass of the composite material.

The process of production of the present invention is particularly suited for the production of the above-described aluminum powder alloy composite material for absorbing neutrons, and is characterized by mixing an aluminum alloy powder having the above-described composition as a base metal with a boron-based compound powder, preferably a B₄C powder with an average particle size of 1-20 µm (more preferably 5-10 µm), to form a mixed powder; press-molding; heating to 300-570 °C in a reduced pressure atmosphere, an inert gas atmosphere or a reducing gas atmosphere; degassing; and subjecting to hot plastic working.

Additionally, another embodiment involves mixing an aluminum alloy powder having the above-described composition as a base metal with a boron-based compound powder, preferably a B₄C powder with an average particle size of 1-20 µm (more preferably 5-10 µm), to form a mixed powder; sealing in an aluminum container; heating to 400-580 °C in a reduced pressure atmosphere, an inert gas atmosphere or a reducing gas atmosphere; degassing; and subjecting to hot plastic working

The hot plastic working process is preferably hot extrusion.

Furthermore, a basket for a cask for housing spent nuclear fuel is made of an aluminum powder alloy composite material for absorbing neutrons according to the present invention as described above.

While an aluminum powder alloy composite material obtained by dispersing a boron-based compound having the capability of absorbing neutrons in a base metal consisting of an aluminum alloy must contain a certain quantity of boron-based compounds in order to attain the desired neutron absorbing ability, if the amount of boron-based compounds is increased, the extremely high melting point and hardness of the boron-based compounds as compared with the aluminum alloy will cause the hardness to increase, but reduce the sintering ability, plastic workability and extendability. Therefore, one might consider changing the aluminum alloy forming the base metal instead of changing the amount of boron when wishing to increase the high-temperature strength, heat resistance and corrosion resistance of the composite material. However, simply selecting alloys that are likely to have the desired properties from among standard (JIS) alloys as, for example, described in Japanese Patent No. 3122436, does not result in adequate strength and corrosion resistance.

Therefore, the present inventors performed diligent research with repeated trial and error in pursuit of aluminum alloys having excellent properties with regard to high-temperature strength, heat resistance and corrosion resistance, and good adhesion to reinforcing materials when used as a base metal for a composite material, trying all types of additive elements without limiting themselves to standard alloys, as a result of which they found that a composite material surprisingly excelling in high-temperature strength, heat resistance and corrosion resistance can be obtained by using an Al-Mn-Mg-Cu-Fe type aluminum alloy, which excels in sintering ability, as a base metal.

Thus, the aluminum alloy powder composite material of the present invention excels in high-temperature strength, heat resistance and corrosion resistance as compared with conventional composite materials.

Additionally, in a preferred embodiment of the present invention, an aluminum alloy powder composite material with good adhesion between the base metal and the reinforcing material, and excellent strength and thermal conductivity is obtained.

Furthermore, the production process of the present invention does not require the boron to be melted, thus having high productivity and being capable of producing the composite material economically.

### DETAILED DESCRIPTION OF THE PREFERRED EMBODIMENTS OF THE INVENTION

As described above, the aluminum powder alloy composite material for absorbing neutrons according to the present invention is an aluminum alloy having a boron-based compound as a neutron-absorbing material, wherein the base metal contains 0.8-3.0 mass% of Mn, 0.15-1.5 mass% of Mg, 0.1-0.6 mass% of Cu and 0.1-1.0 mass% of Fe, balanced by aluminum and unavoidable impurities, and optionally containing one or more of 0.8-2.0 mass% of Si and 0.03-1 mass% of Cr. Herebelow, the functions of the respective elements shall be described.

### [Mn: 0.8-3.0 mass%]

Mn dissolves in large amounts as a solid solution in the Al due to solidification by rapid cooling, and is slow to diffuse in the Al, improving the heat resistance and corrosion resistance of the base metal. Furthermore, the generated compounds of Al-Mn and Al-(Fe+Mn)-Si also improve the heat resistance due to the presence of fine compounds thereof.

The amount required to be effective is at least 0.8 mass%, and if the amount exceeds 3.0 mass%, the deformation resistance becomes too high and the hot workability is reduced.

### [Mg: 0.15-1.5 mass%]

Mg can exist as a solid solution in the base metal, or can form compounds (such as Mg2Si) with other elements, thus improving the mechanical strength and wear resistance. This function is notable at 0.15 mass % or more, but at more than 1.5 mass% the hot workability and corrosion resistance suffer.

Additionally, Mg reduces the melting point of the aluminum alloy, and is itself an element that tends to disperse at high temperatures, thus raising the sintering ability. Furthermore, the wettability of the aluminum alloy with ceramic particles is improved.

### [Cu: 0.1-0.6 mass%]

Cu dissolves as a solid solution in Al, and has the effect of maintaining the strength of the base metal at high temperatures, as well as promoting deposition of Mn compounds as with the other elements. On the other hand, if present in excess of 0.6%, it can reduce the corrosion resistance and tends to cause problems during hot working.

### [Fe: 0.1-1.0 mass%]

Fe forms Al-Fe-Cu compounds, Al-(Fe, Mn) compounds, Al-Fe-Si compounds and Al-(Mn, Fe)-Si compounds, thus increasing the heat resistance. The effect is notable when present in an amount of 0.1 mass% or more, but at more than 1.0 mass%, it can reduce the corrosion resistance and toughness. Additionally, surface defects can tend to occur when working such as during extrusion.

### [Si: 0.8-2.0 mass%]

Si forms compounds with other elements (Al-Fe-Si and Al-(Fe + Mn)-Si compounds), improves the high-temperature strength and improves the wear resistance. These functions become notable at 0.8 mass% or more, and at more than 2.0 mass%, the excess Si will exist by itself, thus reducing its ductile properties such as elongation. When adding Si, it is more effective to lower the Mg content and deposit large amounts of Al-Mn-Si compounds.

Si lowers the melting point of aluminum alloys, and is itself an element that easily disperses at high temperatures, and thereby improves the sintering ability.

### [Cr: 0.03-1 mass%]

Cr has the same effects as Mn, and is therefore preferably added in an amount of 0.03-1 mass%.

### [Unavoidable Impurities]

In the aluminum alloy forming the base metal of the composite material of the present invention, unavoidable impurities such as Zn will not largely affect the properties such as corrosion resistance as long as each element is present in minute amounts of 0.1 mass% or less, and are therefore permissible as unavoidable impurities.

### [Boron-based compounds]

While the boron-based compounds used in the present invention may be of any type as long as they excel in neutron-absorbing ability, preferable examples include boron carbide, boron oxide, boron nitride and compounds of boron and a metal such as aluminum boride, and these may be used alone or as a mixture. In particular, boron carbide B₄C is optimal for use in the composite since it can be mass-produced, and contains about 20% of B-10 which is a boron isotope that absorbs neutrons well.

These boron-based compounds are contained in the aforementioned aluminum alloy powder in an amount of 0.4-24 mass% by boron content. The reason the content is made 0.4 mass% or more is that an adequate neutron absorbing ability cannot be obtained if less than 0.4 mass%, and in order to obtain a sufficient neutron absorbing ability, the neutron absorbing material must be made thick, making it impossible to house the neutron absorbing molded article in a limited space, and making the material very bulky. Additionally, the reason the content is made 24 mass% or less is that if more than 24 mass%, then the deformation resistance is high at the time of molding, making it difficult to mold, and causing the molded article to become brittle and easily broken. Additionally, the contact between the aluminum and boron compound is reduced, making it susceptible to the formation of gaps and reducing the heat dissipating ability. For example; in the case of B₄C, it should be added to the aluminum alloy powder in an amount of 0.5-30 mass% in compound form. If less than 0.5 mass%, it does not adequately function as a neutron-absorbing material, and if more than 30 mass%, the plastic workability and machinability suffer.

Herebelow, a process of production of the present invention shall be explained.

### [First Production Process]

A first embodiment of the production process of the present invention comprises (a) a step of mixing an aluminum alloy powder as a base metal having the aforementioned composition and a boron-based compound powder to form a mixed powder, (b) a step of press-molding the aforementioned mixed powder, (c) a step of heating the resulting molded article by press-molding in a predetermined atmosphere and degassing, and (d) a final step of hot plastic working. Herebelow, the steps in the process shall be explained in detail in the order of steps (a) through (d), after an additional explanation regarding the properties not described regarding the raw materials used.

### (1) Explanation of Raw Materials..

### [Aluminum Alloy Powder as Base Metal]

While the average particle size of the aluminum alloy powder as the base metal of the alloy to be mixed with particles of B₄C and the like is not particularly limited, the upper limit should generally be 500 µm or less, preferably 150 µm or less, and more preferably 60 µm or less. The lower limit of the average particle size is not particularly limited as long as it is producible, and it should generally be at least 1 µm, and preferably at least 20 µm. By making the particle size of the aluminum alloy powder 100 µm or less and the average particle size of the boron-based compound particles 10 µm or less, the boron-based compound particles disperse evenly, and portions where the boron-based compound particles are sparse become very small, thus stabilizing the properties. As for the average particle size of the aluminum alloy powder, if the difference with the average particle size of the particles of B₄C and the like to be explained below is large, cracking can occur during plastic working such as extrusion and rolling, so the difference between average particle sizes should preferably be minimized. If the average particle size is too big, it is difficult to evenly mix particles of B₄C or the like whose average particle size cannot be made too large, and if the average particle size is too small, clumping can occur between the fine aluminum alloy powders, making it very difficult to achieve an even mixture with the B₄C particles. Additionally, by putting the average particle size in the given range, it is possible to achieve exceptional workability, moldability and mechanical properties.

The average particle size in the present invention is the value by laser diffraction type particle size distribution measurement. The powder shape is not limited, and may, for example, be in teardrop form, spherical form, ellipsoid form, flake form or irregular.

The method of producing the aluminum alloy powder is not limited, and any publicly known method of producing metal powders can be used. The method of production can, for example, be atomization, melt-spinning, rotating disc, rotating electrode, or any other - rapid-cooled solidification method but for industrial production, atomization is preferable, particularly gas atomization whereby a powder is produced by atomizing a melt

In atomization, the atomization should be performed after heating the melt to about 700-1200 °C. By setting the temperature to this range, a more effective atomization can be achieved. Additionally, the spray medium/atmosphere during atomization may be air, nitrogen, argon, helium, carbon dioxide, water or a mixture thereof, but the spray medium should preferably be air, nitrogen gas or argon gas for economical reasons.

### [Boron-Based Compound]

While the boron-based compound may be of any average particle size, the difference in particle size between the two types of powders should preferably be small as explained with regard to the average particle size of the aluminum alloy. Specifically, in the case of B₄C, an average particle size of 1-20 µm is preferable. If the average particle size exceeds 20 µm (preferably 10 µm or less), then the sawteeth can be quickly worn when cutting, and if the average particle size is smaller than 1 µm (preferably 5 µm or more), dumping tends to occur between the fine powders, thus making it extremely difficult to achieve an even mixture with the aluminum powder.

The average particle size in the present invention is the value by laser diffraction type particle size distribution measurement. The powder shape is not limited, and may, for example, be in teardrop form, spherical form, ellipsoid form, flake form or irregular.

### (2) Explanation of Steps

### (a) Production of Mixed Powder of Aluminum Alloy and Boron-based compound

An aluminum alloy powder and a boron-based compound powder such as B₄C are prepared, and these powders are evenly mixed. The method of mixture may be a publicly known method such as by use of a mixer such as a V blender or cross-rotary mixer, a vibrating mill, or a satellite mill, for a certain period of time (for example, 10 minutes to 6 hours). Additionally, the mixing process may be dry or wet Media such as alumina balls may be added for the purpose of crushing while mixing.

### (b) Press-molding

The mixed powder of a boron-based compound such as B₄C and aluminum alloy is press-molded into a form that is easily pressure sintered. The temporary molding method may be any publicly known method, such as press-molding using cold isostatic molding, cold uniaxial molding or hot press molding.

### (c) Degassing

The press-molded article is degassed by placing it in a reduced pressure atmosphere, inert gas atmosphere or reducing gas atmosphere, while heating to the temperature range of 300-570 °C. This step causes the moisture adhering to the press-molded article to be vaporized and removed. Additionally, the gas remaining inside the molded article is also removed. In order to remove moisture and gas, it should preferably be left for at least 4 hours at a temperature range of 300-570 °C. If the temperature is less than 300 °C, then the removal of moisture and gas is inadequate, and the gas can expand during subsequent pressure sintering and heat treatments, thus causing defects. If the temperature is greater than 300 °C, partial sintering occurs, making it easy to handle. Additionally, it should preferably be held at 450 °C or more (more preferably, 500 °C), since this makes dielectric heating easy, and heating during pressure sintering easy. In order to achieve adequate temporary sintering, it should be held for at least 1 hour. If the temperature exceeds 570 °C, there is the risk of the aluminum alloy melting or the crystal grains becoming too large, so the temperature should be maintained at 570 °C or less (more preferably 550 °C or less). After degassing, the article is cooled to ordinary temperature. The reduced pressure atmosphere, inert gas atmosphere or reducing gas atmosphere should be retained until it is cooled to 300 °C or less. More preferably, the atmosphere should be retained until ordinary temperature is reached. Alternatively, the article may be directly cooled or heated after degassing to bring it to the hot working temperature to commence hot working.

### (d) Hot Plastic Working (Pressure Sintering)

The temporarily molded article which has been degassed is heated to a predetermined temperature (preferably 400-550 °C), after which it is subjected to hot plastic working such as extrusion, forging or rolling, and pressure sintered. If the heating temperature is less than 400 °C, the deformation resistance is large, and great force is required for hot working. At more than 550 °C, there is the risk of partial melting or the crystal grains becoming too large. Hot plastic working can be performed many times in order to achieve the desired shape, and the hot plastic working may be followed by cold plastic working (rolling, forging, drawing). In the case of cold plastic working, an anneal should be performed prior to working at -350-450 °C. After hot plastic working or cold plastic working, the composite material may be used as is, or may be subjected to heat treatments such as a solution heat treatment or artificial aging.

### [Second Production Process]

A second embodiment of the production process of the present invention comprises (a) a step of mixing an aluminum alloy powder as a base metal having the aforementioned composition and a boron-based compound powder to form a mixed powder, (b') a step of sealing the aforementioned mixed powder in an aluminum container, (c) a step of heating the molded article obtained by press-molding in a predetermined atmosphere and degassing, and (d) a final step of hot plastic working.

By hot plastic working after sealing in an aluminum container that is not a composite material, the composite material surface is covered with aluminum, thus improving the corrosion resistance and thermal conductivity of the composite material. Additionally, since the plastic working tools such as extrusion dice and the boron-based compound do not come into direct contact during plastic working, the lifetime of the tools can be extended, and surface defects are less likely to occur on the composite material surface.

### (1) Explanation of Raw Materials

In addition to the raw materials used in the first production process, an aluminum container is prepared. This aluminum container will remain as the surface layer portion of the composite material after the hot plastic working of the composite material, and may either be left as the surface layer of the composite material, or peeled away. However, when used as the surface layer portion of the composite material without peeling, aluminum having the properties required of the composite material must be used. In that case, the aluminum should be pure aluminum (e.g. JIS1070), or an aluminum alloy such as an Al-Cu alloy (e.g. JIS2017), an Al-Mg alloy (e.g. JIS5052), an Al-Mg-Si alloy (e.g. JIS6061), an Al-Zn-Mg alloy (e.g. JIS7075) or an Al-Mn alloy, these being chosen in consideration of the desired properties, cost and other factors.

The aluminum container may be one that is premolded in the form of a can (body portion) and lid, or may be produced as appropriate by conventional methods. The thickness of the can should be about 1-10 mm, preferably about 4-6 mm, and should have enough strength to endure transportation. The lid may be of the same material or a different material from the can, and may have one or more holes for allowing gas to escape during subsequent molding.

### (2) Explanation of Steps

### (a) Production of Mixed Powder of Aluminum Alloy and Boron-Based Compound

A mixed powder of an aluminum alloy and a boron-based compound is evenly mixed by a conventional method as in the case of the first production process.

### (b') Container Sealing

The mixed powder obtained in step (a) is loaded into the body portion of the aforementioned aluminum container. Then, vibrations are applied to allow the gas in the powder to escape, and the lid portion is attached by welding or the like, to form a sealed container from which powder will not leak during transportation.

Additionally, press molding can be performed before sealing the mixed powder in the container, and in that case, a container sealing process is added after a press molding step according to the first production process.

### (c). Degassing

The sealed container obtained in step (b') is degassed in the same way as in the first production process. That is, the article is placed in a reduced pressure atmosphere, inert gas atmosphere or reducing gas atmosphere at a temperature range of at least 200 °C, preferably at least 450 °C, more preferably 500 °C, and at most 600 °C, preferably at most 550 °C, for degassing, then cooled to ordinary temperature, preferably in the reduced pressure atmosphere, inert gas atmosphere or reducing gas atmosphere to 200 °C or less, or directly cooled or heated to a hot working temperature.

### (d) Hot Plastic Working (Pressure Sintering)

As in the first production process, the temporary molded article obtained in step (c) is heated to a predetermined temperature (preferably 400-550 °C), subjected once or more to hot plastic working such as extrusion, forging or rolling, and in some cases, further subjected to cold plastic working (such as rolling, forging or drawing), and worked to a desired shape.

The aluminum container remains on the surface of the composite material formed in this way, thus forming a molded article cladded with an aluminum surface layer, but as described above, the cladded aluminum container may be peeled or left unpeeled.

### EXAMPLES

Herebelow, the present invention shall be explained in detail with reference to examples.

### [Example 1]

A V blender was used to mix a B₄C powder of average particle size 10 µm at a proportion of 5 mass% with an aluminum alloy powder of average particle size 30 µm with the composition shown in Table 1 made by gas atomization, then press molded into the form of a cylinder of diameter 200 mm by cold isostatic molding. The resulting press molded article was held in a reduced pressure furnace for 4 hours at 560 °C to degas, then cooled to ordinary temperature in a reduced pressure atmosphere. Then, it was reheated to 480 °C, and subjected to hot extrusion to form panels 100 mm wide and 5 mm thick.

The extruded material was tested for its high temperature strength, heat resistance and corrosion resistance.

Here, the high temperature strength was tested by performing a tensile rupture strength test at 200 °C, with those exhibiting a tensile rupture strength of at least 110 Mpa receiving passing marks. The heat resistance was tested by performing a tensile rupture strength test at 200 °C after heating for 100 hours at 200 °C, and those exhibiting a tensile rupture strength of at least 100 Mpa received passing marks. Additionally, the corrosion resistance was evaluated in comparison with pure aluminum after 500 hours of immersion in saline solution at room temperature, taking the weight reduction of the pure aluminum as 1 (10 mg/dm² or less). Those having a score of 4 or less were given passing marks.

The results of the above tests are shown in Table 2.

Additionally, as comparative examples, extruded composite materials using JIS1050 aluminum alloy, JIS2017 aluminum alloy, JIS3003 aluminum alloy, JIS5052 aluminum alloy and JIS6061 aluminum alloy (for the specific compositions, see Table 1) as the base metal were produced using the same methods, and tested for their high temperature strength, heat resistance and corrosion resistance using the same testing methods. These results are also shown in Table 1. The test materials were all T1 materials (as extruded).

**TABLE 1 Base Metal Composition Used in Experiments**

| (Units: mass%) | | | | | | | | |
|---|---|---|---|---|---|---|---|---|
| Alloy | Si | Mg | Mn | Cr | Ni | Fe | Cu | |
| 1 | 0.1 | 0.2 | 0.8 | 0.01 | 0.00 | 0.1 | 0.1 | Present Invention |
| 2 | 0.1 | 0.2 | 1.5 | 0.01 | 0.00 | 0.4 | 0.3 | Present Invention |
| 3 | 0.1 | 0.8 | 1.5 | 0.01 | 0.00 | 0.4 | 0.3 | Present Invention |
| 4 | 0.1 | 1.5 | 2.0 | 0.01 | 0.00 | 0.4 | 0.3 | Present Invention |
| 5 | 0.1 | 0.2 | 0.8 | 0.01 | 0.00 | 1.0 | 0.3 | Present Invention |
| 6 | 0.1 | 0.2 | 2.0 | 0.01 | 0.00 | 1.0 | 0.1 | Present Invention |
| 7 | 0.1 | 2.0 | 2.0 | 0.01 | 0.00 | 1.0 | 0.1 | Comparative Example |
| 8 | 0.8 | 0.2 | 0.8 | 0.01 | 0.00 | 0.1 | 0.1 | Present Invention |
| 9 | 0.1 | 0.8 | 0.8 | 0.01 | 0.00 | 0.1 | 0.6 | Present Invention |
| 10 | 2.0 | 02 | 0.8 | 0.01 | 0.00 | 0.1 | 0.1 | Present Invention |
| 11 | 0.1 | 0.2 | 0.6 | 0.01 | 0.00 | 0.1 | 0.1 | Comparative Example |
| 12 | 0.1 | 0.1 | 0.8 | 0.01 | 0.00 | 0.1 | 0.1 | Comparative Example |
| 13 | 0.1 | 0.4 | 0.8 | 0.01 | 0.00 | 0.05 | 0.1 | Comparative Example |
| 14 | 0.1 | 0.2 | 0.8 | 0.01 | 0.00 | 0.1 | 0.05 | Comparative Example |
| 15 | 0.1 | 2.0 | 0.6 | 0.01 | 0.00 | 0.1 | 0.1 | Comparative Example |
| 16 | 0.1 | 0.5 | 0.8 | 0.01 | 0.00 | 0.1 | 0.7 | Comparative Example |
| 17 | 0.1 | 2.2 | 0.8 | 0.01 | 0.00 | 0.1 | 0.1 | Comparative Example |
| 18 | 2.2 | 0.2 | 0.8 | 0.01 | 0.00 | 0.1 | 0.1 | Comparative Example |
| 19 | 0.1 | 0.2 | 3.2 | 0.01 | 0.00 | 0.1 | 0.1 | Comparative Example |
| 20 | 0.1 | 0.2 | 0.8 | 0.01 | 0.00 | 1.1 | 0.1 | Comparative Example |
| JIS3004 | 0.20 | 0.03 | 1.35 | 0.02 | 0.00 | 0.15 | 0.14 | Comparative Example |
| JIS5052 | 0.12 | 2.7 | 0.04 | 0.30 | 0.00 | 0.05 | 0.03 | Comparative Example |
| JIS6061 | 0.65 | 1.0 | 0.04 | 0.20 | 0.00 | 0.20 | 0.30 | Comparative Example |

| | | | | | | | | |
|---|---|---|---|---|---|---|---|---|
| * Fe in JIS alloys of comparative examples are quantities that were intermixed unavoidably. | | | | | | | | |

**TABLE 2 Property Test Results**

| Alloy | Hi Temp. Str. σB 200 °C | Heat Res. σB 200 °C, 100 h | Cor. Res. (wt loss) | Extrusion | |
|---|---|---|---|---|---|
| 1 | 115 | 105 | A | A surface, pressure | Present Invention |
| 2 | 125 | 120 | B | A | Present Invention |
| 3 | 138 | 130 | B | A | Present Invention |
| 4 | 150 | 145 | A (1.5) | B | Present Invention |
| 5 | 130 | 125 | B | B | Present Invention |
| 6 | 130 | 128 | B | A | Present Invention |
| 7 | 165 | 155 | B | B | Present Invention |
| 8 | 120 | 108 | A | A | Present Invention |
| 9 | 138 | 125 | B (3.8) | B | Present Invention |
| 10 | 125 | 116 | B (3.5) | A | Present Invention |
| 11 | 110 | 98 | A | A | Comparative Example |
| 12 | 115 | 95 | A | A | Comparative Example |
| 13 | 120 | 95 | A | A | Comparative Example |
| 14 | 110 | 98 | A | A | Comparative Example |
| 15 | 140 | 98 | A | B | Comparative Example |
| 16 | 118 | 100 | C (5-2) | B | Comparative Example |
| 17 | 160 | 150 | B | C pressure | Comparative Example |
| 18 | 130 | 115 | C (4.5) | B | Comparative Example |
| 19 | 142 | 135 | B | C surface | Comparative Example |
| 20 | 128 | 120 | C (4.2) | B | Comparative Example |
| JIS3004 | 95 | 90 | A (1.2) | A | Comparative Example |
| JIS5052 | 115 | 90 | A (1.5) | B | Comparative Example |
| JIS6061 | 125 | 85 | B (3.5) | B | Comparative Example |

Table 2 shows that Alloys Nos. 1-6 and 8-10 according to the present invention satisfied the required specifications for high-temperature strength, heat resistance, corrosion resistance and extrusion (evaluation of pressure during extrusion and surface state of extruded material) which are needed for the principal applications of the present materials. Adequate performance can be achieved by adding the principal added elements Mn, Mg, Fe and Cu in predetermined quantitative ranges, then adding Si in a predetermined range, but alloys less than or exceeding these ranges have adequate high temperature strength and heat resistance, but inadequate corrosion resistance and production capability (productivity), making them difficult to put into practice.

That is, JIS3003, JIS5052 and JIS6061 have inadequate heat resistance, and in order to overcome this drawback, it is necessary to select appropriate amounts of Mn, Mg, Fe or Cu as described in the explanations of the functions of the respective elements. If the amount of Mn is less than 0.8%, the effect on heat resistance is reduced even if 0.2% of Mg and 0.1% each of Fe and Cu are added. This is believed to be due to the fact that the amount of Mn compounds present in the base metal is reduced, thus reducing the function of fine compounds preventing the deformation at high temperatures. It is also thought to be due to the fact that when the amount of Mg is reduced, the heat resistance also falls, thus reducing the reinforcement function due to the solid solution of the Mg at high temperatures. When the amount of Fe is reduced, the amount of Al-Fe-Mn(-Si) compounds is also reduced, and when the amount of Cu is reduced, the deposition promoting effect of the fine compounds at high temperatures is reduced.

When considering the JIS-specified products, JIS3003 has insufficient strength. JIS5052 and JIS6061 have too much of a drop in heat resistance. This is because the amounts of the aforementioned compounds generated in these is small, making it impossible to suppress growth of the fine compounds at high temperatures.

## Claims

1. An aluminum powder alloy composite material for absorbing neutrons wherein a boron-based compound having the capability of absorbing neutrons is dispersed in a base metal, **characterized in that** the base metal is an aluminum alloy consisting of 0.8-3.0 mass% of Mn, 0.15-1.5 mass% of Mg, 0.1-0.6 mass% of Cu and 0.1-1.0 mass% of Fe with respect to the total mass of the base metal and optionally further containing at least one of 0.8-2.0 mass% of Si with respect to the total mass of the base metal, and 0.03-1 mass% of Cr with respect to the total mass of the base metal, balanced by aluminum and unavoidable impurities, and that the proportional content of the boron-based compound is 0.4 mass% or more by boron content with respect to the total mass of the composite material.

2. An aluminum powder alloy composite material for absorbing neutrons as recited in Claim 1, **characterized in that** the proportional content of the boron-based compound is 0.4-24 mass% by boron content with respect to the total mass of the composite material.

3. An aluminum powder alloy composite material for absorbing neutrons as recited in any one of Claims 1 to 2, **characterized in that** the average particle size of the boron-based compound when measured by laser diffraction type particle size distribution measurement is 1-20 µm.

4. An aluminum powder alloy composite material for absorbing neutrons as recited in any one of Claims 1 to 3, **characterized in that** the boron-based compound is B₄C.

5. A process of producing an aluminum powder alloy composite material for absorbing neutrons as recited in any one of Claims 1 to 4, **characterized in that** it consists in the steps of mixing a boron-based compound powder and an aluminum alloy powder as a base metal to form a mixed powder; press-molding; heating to 300-570 °C in a reduced pressure atmosphere, an inert gas atmosphere or a reducing gas atmosphere; degassing; and subjecting to hot plastic working.

6. A process of producing an aluminum powder alloy composite material for absorbing neutrons as recited in any one of Claims 1 to 4, **characterized in that** it consists in the steps of mixing a boron-based compound powder and an aluminum alloy powder as a base metal to form a mixed powder; sealing the mixed powder in an aluminum container; heating to 400-580 °C in a reduced pressure atmosphere, an inert gas atmosphere or a reducing gas atmosphere; degassing; and subjecting to a hot plastic working.

7. A basket for a cask to house spent nuclear fuel, **characterized by** being made of an aluminum powder alloy composite material for absorbing neutrons as recited in any one of Claims 1 to 4.

## Patentansprüche

1. Verbundmaterial aus einer Aluminiumpulverlegierung zum Absorbieren von Neutronen, wobei eine borhaltige Verbindung, welche die Fähigkeit zum Absorbieren von Neutronen aufweist, in einem Basismetall dispergiert ist, **dadurch gekennzeichnet,**
**dass** das Basismetall eine Aluminiumlegierung ist, bestehend aus 0,8 bis 3,0 Gew.-% Mn 0,15 bis 1,5 Gew.-% Mg, 0,1 bis 0,6 Gew.-% Cu und 0,1 bis 1,0 Gew.-% Fe, bezogen auf die Gesamtmenge des Basismetalls, und gegebenenfalls zusätzlich mindestens eines von Folgendem: 0,8 bis 2,0 Gew.-% Si in Bezug auf die Gesamtmenge des Basismetalls und 0,03 bis 1 Gew.-% Cr in Bezug auf die Gesamtmenge des Basismetalls, ausgewogen durch Aluminium und unvermeidbare Verunreinigungen, und
**dass** der anteilige Borgehalt der borhaltigen Verbindung in Bezug auf die Gesamtmenge des Verbundmaterials 0,4 Gew.-% oder mehr beträgt.

2. Verbundmaterial aus einer Aluminiumpulverlegierung zum Absorbieren von Neutronen nach Anspruch 1, **dadurch gekennzeichnet, dass** der proportionale Borgehalt der borhaltigen Verbindung in Bezug auf die Gesamtmenge des Verbundmaterials 0,4 bis 24 Gew.-% beträgt.

3. Verbundmaterial aus einer Aluminiumpulverlegierung zum Absorbieren von Neutronen, nach einem der Ansprüche 1 bis 2, **dadurch gekennzeichnet, dass** die durchschnittliche Partikelgröße der borhaltigen Verbindung, wenn durch eine Messung der Partikelgrößenverteilung vom Laserbeugungstyp gemessen, 1 bis 20 µm beträgt.

4. Verbundmaterial aus einer Aluminiumpulverlegierung zum Absorbieren von Neutronen, nach einem der Ansprüche 1 bis 3, **dadurch gekennzeichnet, dass** die borhaltige Verbindung B₄C ist.

5. Verfahren zum Herstellen eines Verbundmaterials aus einer Aluminiumpulverlegierung zum Absorbieren von Neutronen, nach einem der Ansprüche 1 bis 4, **dadurch gekennzeichnet, dass** es aus den folgenden Schritten besteht:
Mischen eines borhaltigen Verbindungspulvers und eines Aluminiumlegierungspulvers als Basismetall, um ein Mischpulver zu bilden;
Formpressen;
Erwärmen auf 300 bis 570 °C in einer Atmosphäre mit reduziertem Druck, einer Inertgasatmosphäre oder einer reduzierenden Gasatmosphäre;
Entgasen; und
Heißverformen.

6. Verfahren zum Herstellen eines Verbundmaterials aus einer Aluminiumpulverlegierung zum Absorbieren von Neutronen, nach einem der Ansprüche 1 bis 4, **dadurch gekennzeichnet, dass** es aus den folgenden Schritten besteht:
Mischen eines borhaltigen Verbindungspulvers und eines Aluminiumlegierungspulvers als Basismetall, um ein gemischtes Pulver zu bilden;
Verschließen des gemischten Pulvers in einem Aluminiumbehälter;
Erwärmen auf 400 bis 580 °C in einer Atmosphäre mit reduziertem Druck, einer Inertgasatmosphäre oder einer reduzierenden Gasatmosphäre;
Entgasen; und
Heißverformen.

7. Korb für einen Aufnahmebehälter für verbrauchten Kernbrennstoff, **dadurch gekennzeichnet, dass** er aus einem Verbundmaterial aus einer Aluminiumpulverlegierung zum Absorbieren von Neutronen nach einem der Ansprüche 1 bis 4 hergestellt worden ist.

## Revendications

1. Matériau composite d'alliage de poudre d'aluminium permettant d'absorber des neutrons, dans lequel un composé à base de bore ayant la capacité d'absorber des neutrons est dispersé dans un métal de base, **caractérisé en ce que** le métal de base est un alliage d'aluminium constitué de 0,8 à 3,0 % en masse de Mn, de 0,15 à 1,5 % en masse de Mg, de 0,1 à 0,6 % en masse de Cu et de 0,1 à 1,0 % en masse de Fe par rapport à la masse totale du métal de base, et contenant en outre éventuellement au moins 0,8 à 2,0 % en masse de Si par rapport à la masse totale du métal de base et/ou 0,03 à 1 % en masse de Cr par rapport à la masse totale du métal de base, complétés par de l'aluminium et des impuretés inévitables, et **en ce que** la teneur proportionnelle du composé à base de bore est supérieure ou égale à 0,4 % en masse de la teneur en bore par rapport à la masse totale du matériau composite.

2. Matériau composite d'alliage de poudre d'aluminium permettant d'absorber des neutrons selon la revendication 1, **caractérisé en ce que** la teneur proportionnelle du composé à base de bore est de 0,4 à 24 % en masse de teneur en bore par rapport à la masse totale du matériau composite.

3. Matériau composite d'alliage de poudre d'aluminium permettant d'absorber des neutrons selon l'une quelconque des revendications 1 à 2, **caractérisé en ce que** la taille de particule moyenne du composé à base de bore, mesurée par utilisation d'une mesure de distribution de taille de particules du type à diffraction laser, est de 1 à 20 µm.

4. Matériau composite d'alliage de poudre d'aluminium permettant d'absorber des neutrons selon l'une quelconque des revendications 1 à 3, **caractérisé en ce que** le composé à base de bore est B₄C.

5. Procédé de production d'un matériau composite d'alliage de poudre d'aluminium permettant d'absorber des neutrons selon l'une quelconque des revendications 1 à 4, **caractérisé en ce qu'**il consiste à mélanger une poudre de composé à base de bore et une poudre d'alliage d'aluminium comme métaux de base pour former une poudre mélangée ;
à mouler par pressage ;
à chauffer entre 300 et 570 °C dans une atmosphère à pression réduite, dans une atmosphère de gaz inerte ou dans une atmosphère de gaz réducteur ;
à effectuer un dégazage ; et
à soumettre à un façonnage plastique à chaud.

6. Procédé de production d'un matériau composite d'alliage de poudre d'aluminium permettant d'absorber des neutrons selon l'une quelconque des revendications 1 à 4, **caractérisé en ce qu'**il consiste à mélanger une poudre de composé à base de bore et une poudre d'alliage d'aluminium comme métaux de base pour former une poudre mélangée ;
à colmater la poudre mélangée dans un récipient en aluminium ;
à chauffer entre 400 et 580 °C dans une atmosphère à pression réduite, dans une atmosphère de gaz inerte ou dans une atmosphère de gaz réducteur ;
à effectuer un dégazage ; et
à soumettre à un façonnage plastique à chaud.

7. Panier pour un fût, destiné à contenir du combustible nucléaire usagé, **caractérisé en ce qu'**il est constitué d'un matériau composite d'alliage de poudre d'aluminium absorbant des neutrons selon l'une quelconque des revendications 1 à 4.
